# EUROPEAN PATENT APPLICATION

(11) **EP 3 885 098 A1**
(43) Date of publication of application: **29.09.2021**
(21) Application number: 21161009.2
(22) Date of filing: 05.03.2021
(51) Int. Cl.: B29C 44/58, B29C 44/34, B29C 31/00, B29C 33/00, B29C 33/34

(54) **MOULD SYSTEM**

(30) Priority: 24.03.2020 DK PA202070182; 25.03.2020 DK PA202070186
(71) Applicant: Bramming Plast-Industri A/S, 6740 Bramming (DK)
(72) Inventor: MØLLER, Casper Siewers, 6710 Esbjerg (DK); KRISTENSEN, Jimmi Schmidt, 6740 Bramming (DK); JENSEN, Kasper Kamp, 6740 Bramming (DK)
(74) Representative: Patrade A/S

(57) **Abstract**

Mould system (30) for manufacturing objects (44) made from a foamable material, where said mould system comprises an interface part (32') and a mould part (22, 24) where said mould part comprises two shell parts (34, 36), where the shell parts when assembled form a desired cavity (42) between them, and where each shell part has an inner surface being the mould surface (60), and an outer surface (56), where in between the inner surface and the outer surface a plurality of cooling and/or heating channels (70) and/or cavities are provided, and where on the outer surface integral interface means (32') are provided, said interface means being suitable to arrange the mould system in a molding machine, mould carrier system (84) or unit, such that the two shell parts may be forced together or withdrawn from each other, where said mould system are manufactured by additive manufacturing techniques, such as 3D-printing of polymer-based materials, or any other suitable material for 3D-printing.

## Description

### Field of the Invention

The present invention relates to a mould system for manufacturing objects made from a foamable material as well as a method of moulding a product from a foamable material.

### Background of the Invention

Objects made from foamable materials find widespread use such as for example in moulded furniture parts, technical applications such as vibration and sound damping, inside cushions, as padding in furniture, car seats, support structures behind car interiors and in a host of other uses all taking the foamable material's properties into good use.

Foamable materials and particularly foamable materials foamed from a polymer base material may be designed with a lot of specific properties where the properties may be selected according to the use. For example the resulting foam properties may be spanning from very flexible and resilient to very rigid and supportive, designed by selecting the proper polymer formulation as may the strength characteristics, particularly where foam materials may have a relatively rigid structure or structures being very soft and resilient such as for example cushions, sponges etc. Furthermore the foam density is also influenced by these characteristics. Naturally, any foam characteristic in between the extremes with respect to the various characteristics may also be designed.

Additionally, foams are very lightweight and at the same time may absorb energy such that for example by using foams in automobiles the foam may with different properties be used as cushions or energy absorbing zones for safety reasons.

The present invention is mainly directed to a mould system for manufacturing objects made from a foamable material and in particular the foamable material is a polymer material such as a polyurethane foam or other isocyanate based foams or other thermosetting foams and thermoplastic foam materials.

Foams such as mentioned above may also be provided in a variety of densities, mechanical properties, hardness, elasticities and strengths as will be explained further below.

The moulding process of objects is a relatively expensive process in that some objects are relatively large and thereby require a relatively large and expensive mould. Furthermore, in order to achieve an even foam distribution and density throughout the object being moulded, it is necessary to control the foaming process inside the mould. Polyurethane for example is poured into the mould as a liquid which will react by creating a foam which will eventually fill the cavity in the mould. In order to control the cell structure (air voids in the foam) and cell size and thereby for flexible foams the resiliency and the elasticity of the foam, and for rigid foams the strength and support properties, it is very important to control the process parameters and in particular the temperature inside the mould to provide the desired balanced reaction profile. For this purpose it is well-known in the art to incorporate channels (milled channels with copper pipes) in the moulds such that a cooling/heating media may be circulated in the channels in order to provide an optimum foaming environment inside the mould. Another aspect which needs to be taken into consideration is the shape of the object to be moulded. If the foam is allowed to expand into a "dead end" - i.e. a part of the mould without venting (air outlet), this will also influence the properties of the resulting foam.

In the art, moulds are typically made from a fibre reinforced polymer material, for example glass fibre reinforced polymer (GFRP) provided with a gel coating in order to provide a smooth surface, or a milled metal, typically aluminium, component. It is a costly process to mill metal moulds (typically from aluminium) but due to the inherent strength properties of particularly aluminium, they have a long useful life expectancy. Furthermore they are stable in themselves, whereas for larger foam objects, GFRP moulds will need a support structure in order to remain stable enough during production. Additionally machined metal moulds are very precise and a plurality of moulds for the same objects will be substantially identical, whereas GFRP moulds are hand made and as such the moulds may experience more variations, i.e. larger tolerances between moulds manufacturing identical objects. The cooling pipes/conduits, typically copper pipes, are embedded in the glass fibre material/metal components as close to the surface as possible. However, it is clear that for structural reasons particularly with relatively large moulds, it is necessary to have a glass fibre reinforced resin layer and the gel coat or a metal layer between the foam material and the cooling conduit. Furthermore, it is necessary to provide a stabilizing structure behind the glass fibre reinforced shell/mould surface which reinforced structure is typically a steel structure which is also embedded in the glass fibre reinforced resin making up the mould surfaces. Furthermore arranging the conduits and embedding the conduits in GFRP is usually carried out by hand creating hazardous working environment and increased cost as compared to machine made moulds - known from for example plastic injection moulding.

This combined reinforced structure and mould surface is then positioned in a mould carrier where two mould halves with respective embedded cooling/heating conduits and reinforcement structures are positioned such that when the mould is closed the enclosed cavity corresponds to the object which it is desirable to mould.

For large series of more or less identical objects the moulds may wear out whereby it is necessary to either recondition and/or repair the moulds or manufacture entirely new moulds. As already mentioned above it is clear that in most cases GFRP moulds wear out faster than metal moulds.

Furthermore, the production cycle of foaming polyurethane objects is relatively long in that the foam inside the mould needs time to cure to a certain strength (establish a substantially stable cell structure) before it is possible to remove the moulded object from the mould system. In practice, the moulds can only be removed after a significant curing time (often from a number of minutes up to a number of hours) and as such in order to obtain a rational production, it is necessary to have a plurality of moulds in order to be able to mould an economically feasible number of objects on each production day. It is clear that the number of moulds further increases the costs of production.

### Object of the Invention

Consequently, it is an object of the present invention to provide a mould system as well as a method of moulding foamable objects which address these drawbacks.

### Description of the Invention

The invention addresses this by providing a mould system for manufacturing objects made from a foamable material, where said mould system comprises an interface part and a mould part where said mould part comprises two or more shell parts, where the shell parts when assembled form a desired cavity between them, and where each shell part has an inner surface being the mould surface, and an outer surface, where in between the inner surface and the outer surface a plurality of cooling and/or heating channels or cavities are provided, and where on the outer surface integral interface means are provided, said interface means being suitable to arrange the mould system in a mold carrier, such that the two shell parts may be forced together or withdrawn from each other.

The construction of the mould where an inner surface is spaced from an outer surface such that a plurality of cooling and/or heating channels or cavities is accommodated in the space between these two surfaces provides a much less work intensive manufacturing process of the mould and at the same time provides a more cost efficient manufacturing process. This in combination with the fact that the outer surface of the mould is provided with an interface such that any mould having various mould shapes, but provided with identical interface parts, will be able to be mounted in the same mould carrier used for many different moulds, without having to alter the tools/mould carrier into/onto which the mould parts are traditionally fastened.

In this connection the plurality of cooling and/or heating channels or cavities, shall be understood as providing means inside the shell parts allowing for cooling or heating of the shell parts. It is contemplated that a suitable liquid may be circulated in the channels/cavities in order to either heat or cool the mould surface of the shell part. The choice of heating or cooling depends on the desired temperature in relation to the foaming process. It is also contemplated that electrical heating mats/netting may be embedded in the shell construction or arranged in the cavities, such that the electrical heating mats/netting may provide the desired heating, and still allow a media to be circulated in the channels/cavities.

In a still further advantageous embodiment of the invention at least the shell parts are manufactured using additive manufacturing techniques applying a polymer based material or a metal or a combination of polymer and metal or any other suitable material used for additive manufacturing.

Among the many types of additive manufacturing techniques used presently, 3D printing is the dominating technology. With the 3D printing technology it is possible to program the printer to print any desired shape and in this manner it is also possible to print the cooling/heating channels or cavities as integral parts in the moulds during the additive manufacturing process.

The 3D printing process builds a three-dimensional object from a computer-aided design (CAD) model, usually by successively adding material layer by layer, which is why it is also called additive manufacturing, unlike conventional machining, casting and forging processes, where material is removed from a stock item (subtractive manufacturing) or poured into a mould and shaped by means of dies, presses and hammers.

The term "3D printing" covers a variety of processes in which material is joined or solidified under computer control to create a three-dimensional object, with material being added together (such as liquid molecules or powder grains being fused together), typically layer by layer. In the 1990s, 3D-printing techniques were considered suitable only for the production of functional or aesthetic prototypes and a more appropriate term for it was rapid prototyping. As of 2019 the precision, repeatability and material range have increased to the point that some 3D-printing processes are considered viable as an industrial-production technology, whereby the term additive manufacturing can be used synonymously with "3D printing". One of the key advantages of 3D printing is the ability to produce very complex shapes or geometries, and a prerequisite for producing any 3D printed part is a digital 3D model or a CAD file.

The most-commonly used 3D-printing process is a material extrusion technique called fused deposition modeling (FDM). While FDM technology was invented after the other two most popular technologies, stereolithography (SLA) and selective laser sintering (SLS), FDM is typically the most inexpensive of the three by a large margin, which lends to the popularity of the process.

The term "3D printing" originally referred to a process that deposits a binder material onto a powder bed with inkjet printer heads layer by layer. More recently, the popular vernacular has started using the term to encompass a wider variety of additive-manufacturing techniques such as electron-beam additive manufacturing and selective laser melting.

With respect to the present invention it is clear that the skilled person will apply the additive manufacturing technology in the most advantageous manner in order to manufacture the moulds.

Furthermore, by using 3D printing technologies where different materials or different densities of material are used at strategic points in the mould it is possible to provide the mould surface with a very dense and compact structure (smooth surface) whereas the rest of the mould behind the moulding surface which does not come into contact with the foam such as the carrying structure of the foam may not necessarily be made from the same types of material, but may be made from less material having a higher strength such that the entire mould is designed and printed according to the optimum use of the materials and printing technologies.

Furthermore, by using additive manufacturing technologies such as for example 3D printing the pattern and design of the cooling/heating channels or cavities may be designed such that cooling or heating channels are provided in the areas of the mould where for example computer modelling indicates that cooling or heating is most needed. In this context also various dimensions of the cooling channels or cavities may be provided in order to allow sufficient cooling/heating medium to be available in the sections of the mould where it is desirable. In this context "medium" shall also include (electrical) heating mats or nets. Typically, in practice the materials from which the foam is generated is introduced into the mould at a relatively moderate temperature, for example 22-25°C whereas for some types of for example polyurethane foam the most optimum foaming temperature inside the mould is in the range of 45-55°C. Naturally, for a particular foam a particularly desired reaction temperature inside the mould is desirable, but by connecting the cooling/heating channels and/or cavities of the mould parts to a controllable system it is possible to control and regulate the temperature inside the conduits and/or cavities integrated in the mould parts, thereby achieving a very specific temperature in the mould and in particular on the mould surfaces such that the best possible conditions for achieving the desired foam reaction profile are present. Furthermore it is possible to design the lay-out of the channels and cavities in the mould shell such that in areas where extra heat/cooling is needed more channels and/or cavities are provided than in other areas.

Most foam materials, for example polyurethane foams, are made from two or more separate main components. When these components are mixed either just before being introduced into the mould or inside the mould they will react relatively with each other in an exothermic reaction, which means heat will be generated. For this purpose it is desirable to be able to have temperature control in/of the mould parts, such that a suitable mold temperature may be reached before startup and during the forming process being able to retain a sustainable temperature span.

For some types of foam the temperature in the initial foaming phase will rise to above 100°C and for some foams the temperature may reach 200°C which consequently requires a substantial cooling effort, particularly during the last part of the curing process.

By being able to design the mould halves and in particular the distribution and size of the cooling channels and/or cavities it is possible to achieve a substantially improved cooling effect as compared to prior art moulds where the cooling conduits are integrated by hand and plastered into the rear-side of the mould.

By being able to print the channels and/or cavities directly onto the mould surface the cooling/heating channels and/or cavities will be closer to the foaming material and at the same time cooling/heating channels and/or cavities may be provided in areas with substantial heat production such that more cooling channels or cavities are provided in these areas than in other areas with less heat production. In this manner it is possible to create ideal homogenous foaming conditions throughout the moulds irrespectively of the shape of the mould cavity and thereby the product which is being foamed.

In a further advantageous embodiment of the invention the shell parts are delimited by a perimeter edge where said perimeter edge is flexible, such that when the two shell parts are urged together the flexibility of the perimeter edge will create a tight fit sufficient to avoid build-up of flash.

As opposed to traditional injection plastic injection moulds where the injection pressure is very high (minimum 12 MPa/12o bars)) the foaming pressure is relatively low in that the foaming pressure may be in the range of 20-800 Kilopascal/0,2-8 bar. Furthermore the moulds are usually provided with venting apertures such that any air trapped in the mould may escape as the foaming material expands thereby pushing the air out of the mould cavity. In this manner a very low pressure is present inside the mould. For these purposes it is also possible to make the perimeter edges of the shell parts relatively soft such that by urging two shell parts towards each other the perimeter will deform when coming into contact with the perimeter edge of the opposite shell thereby facilitating a substantially tight connection between the two opposing halves of the mould.

From plastic injection moulding technology it is well-known that unevennesses or high pressure in the moulds may cause flashing which is a phenomenon where injection moulding materials are escaping the moulds in an uncontrolled manner requiring finishing procedures on the objects being moulded. The same is of course true for foamable materials where if the moulds are not tightly interfitting the foam material will be able to escape the moulds.

By providing the flexible perimeter edges flashing may to a large degree be avoided providing for overall improved foamed articles. Furthermore this feature also decreases the need for finishing work after de-moulding.

In a still further advantageous embodiment of the invention the cooling and/or heating channels and/or cavities are provided with an integrated coupling interface to a source of cooling/heating medium, where said coupling interfaces are moulded together as part of the mould manufacturing process.

With this configuration it is very easy to replace a mould at or in the mould carrier simply by disconnecting the conduits and/or electrical cables by means of couplings, fit a different mould and reapply/reattach the cooling/heating conduits and/or cables to the mould for allowing the mould to be used for foaming the next object.

This is particularly useful seen in the light that it is not possible to remove/demould the moulded objects from the mould until the foam has cured sufficiently such that it will not deform after demoulding. By quickly being able to exchange moulds in the mould carrier enhanced productivity is achieved.

In a further advantageous embodiment the interface means are provided on the outside in positions tilting the mould into a desired position according to the shape of the cavity, such that entrapped air during the foaming process may migrate upwards and escape through venting openings in the mould.

As the interface means dictates how the mould is positioned in the moulding machine, and not vice-versa, it is possible to design the interface means such that depending on the shape of the article to be moulded, the most optimum position of the mould may be achieved. In this connection the most optimum position is determined by a number of factors, such as the shape of the item to be moulded, thicker/thinner portions of the item, desired surface characteristics of the finished item etc.

The invention is also directed to a method of manufacturing moulded items with a mould as discussed above. Naturally the method will exploit the advantages of the invention in a novel and inventive manner.

### Description of the Drawing

The invention will now be explained with reference to non-limiting examples with reference to the accompanying drawings wherein
- Figure 1: illustrates in a schematic form the typical lay-out of an installation for moulding foamable materials
- Figure 2: illustrates an exploded view of a mould according to the present invention
- Figure 3: illustrates the inner part of the shell
- Figure 4: illustrates a cross-section through a shell

### Detailed Description of the Invention

Polyurethane systems can be supplied as 2-component systems consisting of a polyol blend with additives and blowing agent(s) and a di- or polyisocyanate, which is often referred to as polyurethane reaction moulding systems, compared with the pellet form of most thermoplastics.

Depending on how the polyurethane system is formulated, the parts moulded can vary between foams with high flexibility to foams with high rigidity and from very lightweight to high-density or even solid materials, resulting in a high versatility of properties.

Traditional moulds are commonly made from a fibre reinforced polymer material or CNC-machined out of aluminum. This material is all that is required to stand up to the low pressures and temperatures of the polyurethane reaction moulding process. The benefits of the polyurethane reaction moulding technology is for example moulded plastic parts with complex features on its inside and outside, at a fraction of the cost of high-pressure injection moulds.

Moulds for polyurethane foaming are significantly less expensive compared to the cost of high-pressure injection moulds. For moulds manufactured according to the present invention using an additive manufacturing process, in addition to improved characteristics the cost is even lower, sometimes 1/10 of normal cost.

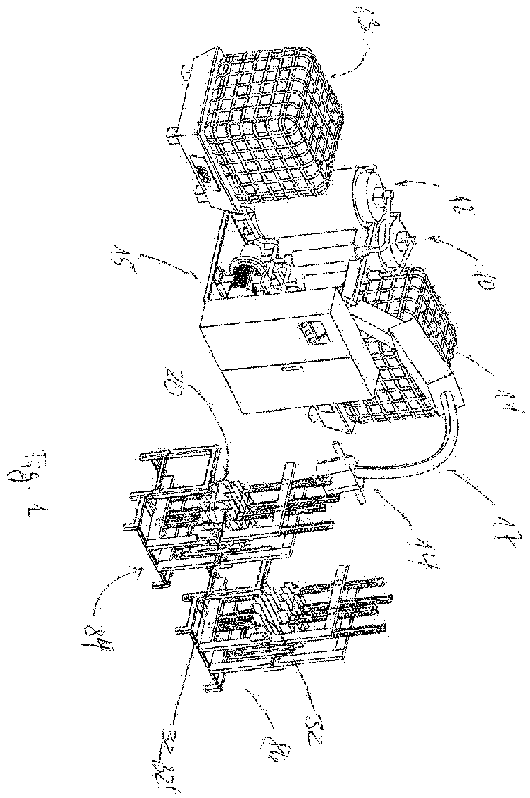

In fig. 1 is illustrated, in a schematic form, the lay-out of a reaction injection moulding installation. It shall be understood that also other technologies may be utilised with the moulds and method according to the present invention.

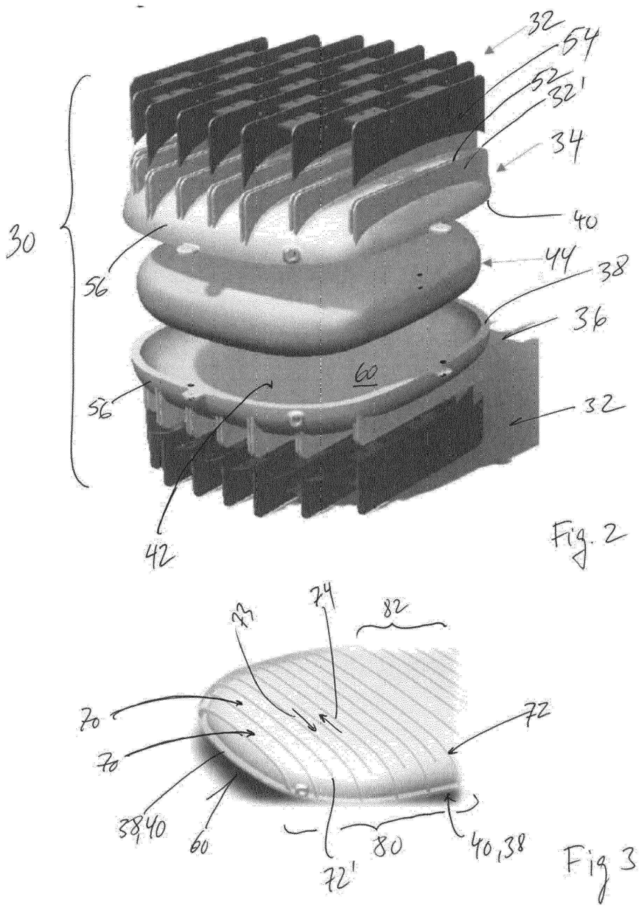

The lay-out comprises two day tanks 10, 12 in which the base materials for the polyurethane foam are stored. The base materials, may be stored in large storage tanks 11,13 prior to material being transferred to the day tanks 10,12. From the day tanks 10,12 a control and mixing computer unit 15 doses the desired amounts of foamable base materials which are pumped on through a conduit 17 to a mixer and injection head 14. This mixer and injection head is typically provided with nozzle or other means for transferring the mix to the mould 20 which typically comprises an upper mould part 22 and lower mould part 24 (see fig. 2).

In the illustrated embodiment of the invention the mould 20 is arranged in a mould carrier 84. In the mould carrier 84 are provided various means for adjusting the mould 20 in the most optimum position, i.e. the mould may be rotated into a position most suitable for the object to be manufactured. The mould 20 is on the outside provided with an interface part 32' which is engaged with the interface unit 32 of the mould carrier.

In the mould carrier 86 illustrated next to the first mould carrier 84, no mould is arranged. The interface unit 32 is ready to receive a mould.

The present invention is, as discussed above, concerned with providing an improved mould 20 in moulding processes involving foamable materials such as for example polyurethane foam. It is clear that the mould according to the present invention is suitable to be integrated into a lay-out as illustrated in figure 1, however, other manufacturing processes may also be used in order to utilize the mould according to the invention.

The mould 20 will typically be provided with means 32' for attaching the mould to a mould carrier system, and it will also be provided with means for connecting the mould 20 with the injection head 14 providing the reaction mixture.

Furthermore, the mould carrier system 84 is also provided with means such that the mould 20 may be rotated inside the mould carrier system in order to ensure that the foamable material is distributed into all the cavities of the mould. This again requires relatively complicated interconnection means between the mould and the mould carrier system in that for example the conduits leading cooling/heating media to the mould must be arranged in such a manner that the mould can be rotated without compromising the conduits.

Turning back to figure 2 an exploded view of a mould 30 according to the present invention is illustrated. The mould 30 is divided into two halves 22,24, an upper half comprising an interface unit 32 and a first shell part 34, a second shell part 36 and a further interface part 32'. The interface unit 32 is mounted on the mould carrier 84 as a standard interface suitable to engage and mount other shapes of moulds provided with the same interface part 32'. As long as any mould is provided with standard interface part 32' it may be mounted in the interface unit 32 and thereby the mould carrier 84 very quickly, and without adaptations of the mould or mould carrier. When the edges 38, 40 of the shell parts are brought into contact, the two shell parts 34, 36 define a cavity 42. In this embodiment the cavity will when foamable material is injected into the mould cavity 42 shape a cushion 44, but it shall be understood that the shell parts 34, 36 may be given any desired shape in order to provide a cavity 42 corresponding to the desired object which it is desirable to mould for whatever type of application or product desired.

The mould shells are manufactured in an additive manufacturing process such as for example 3D printing. By providing identical interface means 32' on the shell parts 34, 36 it is possible to use a standard interface 32 in order to mount the mould 30 in a mould carrier system as for example indicated and described with reference to figure 1. In this illustrative embodiment the interface means on the shells 34, 36 are in the form of elevated grooves 52 in which grooves the blades 54 of the interface unit 32 may be inserted and fastened.

By providing the grooves 52 with the same relative distance and the same extent from the outer surface 56 of the shells 34, 36 and likewise provide uniform spacing of the blades 54 in the interface unit 32, it is possible to use this connection as a standard connection between shells 34, 36 given any desired shape. As the interface parts, regardless of the shape and size of the cavity 42 provided by the shells 34, 36, will be uniform/standard, it is possible to mount and arrange the moulds inside the mould carrier system in a standardized manner.

The shells 34, 36 have an inner surface 60 suitable to form the mould's surface and an outer surface 56. In between the two surfaces 56, 60 is arranged a number of cooling/heating channels or cavities. With reference to figure 3 the inner part of the shell 34, 36 is illustrated. The moulding surface 60 is facing downwards in the figure, and the outer surface 56 has been removed in order to expose the cooling/heating channels 70 arranged in a desired pattern in between the shell part's outer and inner surfaces 56, 60.

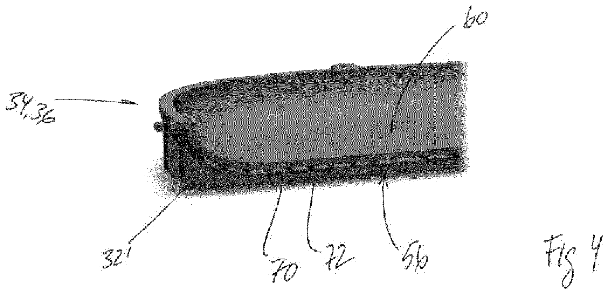

This is further illustrated with reference to figure 4 which illustrates a cross-section through a shell 34, 36. Between the outer surface 56 and the inner surface 60 is provided a number of cooling/heating channels 70. Each channel is separated by the next by intermediate walls 72. Turning back to figure 3 the intermediate walls 72 are illustrated as spanning from edge to edge of the shell. However, in order to create flow channels such that the cooling or heating media will be in contact with substantially the entire surface minus the area occupied by the intermediate walls 72 some of the intermediate walls 52 are shortened as illustrated by the wall 72'.

In this manner the cooling/heating media guided into the cooling/heating channels 70 will be able to flow in opposite directions into adjacent cooling/heating channels 70 as illustrated by the arrows 73, 74. In this manner it is clear that the contact area between the cooling/heating media and the inner surface 60 of the shell parts 34, 36 is very large and as such it is possible to control the temperature inside the mould to a much higher degree than what is customary with ordinary moulds.

Furthermore, due to the additive manufacturing processes the design of the intermediate walls 72 can be carried out completely freely such that any desired cooling regime may be implemented on any desired part of the mould. For example the mould may be subdivided into sections with respect to the heating/cooling zones such that for example in one zone illustrated by reference number 80 the cooling or heating media may be provided with a lower or higher temperature relative to a different section illustrated by reference number 82.

Also with respect to figure 3 it may be seen that the edges 38 of the shells 34, 36 may be designed such that they have a relatively large contact area, but at the same time due to the additive manufacturing process may be provided with a lower stiffness and thereby higher flexibility. The contact between the edges 38, 40 may be substantially flexible such that a close and tight fit is achieved when the mould halves 34, 36 are urged towards each other in order to delimit the cavity 42.

In this situation, due to the flexibility, the edges 38, 40 may deform relative to each other in order to create and provide this close fit.

## Claims

1. Mould system for manufacturing objects made from a foamable material, where said mould system comprises an interface part and a mould part, where said mould part comprises two or more shell parts, where the shell parts when assembled form a desired cavity between them, and where each shell part has an inner surface being the mould surface, and an outer surface, where in between the inner surface and the outer surface a plurality of cooling and/or heating channels are provided, and where on the outer surface integral interface means are provided, said interface means being suitable to arrange the mould system in a mold carrier, such that the two shell parts may be forced together or withdrawn from each other.

2. Mould system according to claim 1 where at least the shell parts are manufactured using additive manufacturing techniques applying a polymer based material or a metal or a combination of polymer and metal or any other suitable material used for additive manufacturing.

3. Mould according to claim 1 or 2 where the shell parts are manufactured by 3D-printing, using a polymer based material.

4. Mould according to any preceding claim wherein the mould surfaces are surface treated with a low friction compound in order to increase its slip properties.

5. Mould system according to any preceding claim, wherein the shell parts are delimited by a perimeter edge, and where said perimeter edge is flexible, such that when the two shell parts are urged together the flexibility of the perimeter edge will create a tight fit sufficient to avoid build-up of flash.

6. Mould according to any preceding claim, wherein the cooling and/or heating channels and/or cavities are provided with integrated coupling interfaces to a source of cooling/heating medium, where said coupling interfaces are moulded together as part of the mould manufacturing process.

7. Mould according to any preceding claim, wherein the cooling and/or heating channels and/or cavities are provided with an electrical net or mat for heating and channels or cavities for cooling media.

8. Mould according to any preceding claim, wherein the interface means are provided on the outside in positions tilting the mould into a desired position according to the shape of the cavity, such that entrapped air during the foaming process may migrate upwards and escape through vent openings in the mould.

9. Method of moulding a product from a foamable material comprising the following steps:
a) either selecting a suitable mould from a mould storage, or designing and manufacturing a suitable mould using additive manufacturing techniques, preferably 3D printing, said mould having the features of a mould according to any of claims 1 to 8;
b) arranging the mould in a mould carrier system, where the interface means are attached to movable parts in the mould carrier system, and a source of cooling and/or heating medium is connected to the cooling and/or heating channels and/or cavities integrated into the shells;
c) urging the shell parts against each other and dispensing a suitable predetermined amount of polyurethane liquid reaction mixture into the mould by means of a polyurethane dosing machine and allowing the polyurethane to expand by foaming inside the mould.

10. Method according to claim 9 wherein method step c) is modified by urging the shell parts against each other and dispensing a suitable predetermined amount of polystyrene beads into the cavity of the mould, followed by steam treatment of the beads in the cavity in order to expand the beads.
